# EUROPEAN PATENT APPLICATION

(11) **EP 4 491 484 A1**
(43) Date of publication of application: **15.01.2025**
(21) Application number: 24177088.2
(22) Date of filing: 21.05.2024
(51) Int. Cl.: B60W 60/00, G01C 21/30, G01C 21/00, G06V 20/58, G08G 1/16

(54) **LOG MANAGEMENT SYSTEM AND LOG MANAGEMENT METHOD**

(30) Priority: 10.07.2023 JP 2023113065
(71) Applicant: TOYOTA JIDOSHA KABUSHIKI KAISHA, Toyota-shi, Aichi-ken, 471-8571 (JP)
(72) Inventor: UDATE, Masateru, Tokyo, 103-0022 (JP); OKA, Naoya, Toyota-shi, 471-8571 (JP); TAKAHASHI, Yuki, Toyota-shi, 471-8571 (JP)
(74) Representative: J A Kemp LLP

(57) **Abstract**

A log management system (100) stores log data (123) and specific point information (122) that shows one or more specific points. When it is determined that a vehicle (1) has traveled through any one of the one or more specific points, the log management system (100) record detection information detected by a recognition sensor (11) at the one specific point through which the vehicle (1) has traveled in association with the one specific point in the log data (123). And the log management system (100) acquires past detection information associated with the same specific point as the one specific point. And the log management system (100) compares the detection information recorded this time with the past detection information to determine whether there is a significant difference therebetween. When it is determined that there is the significant difference, the log management system (100) records a determination that there is the significant difference in the log data (123).

## Description

### CROSS-REFERENCE TO RELATED APPLICATION

The present disclosure claims priority to Japanese Patent Application No. 2023-113065, filed on July 10, 2023, the contents of which application are incorporated herein by reference in their entirety.

### TECHNICAL FIELD

The present disclosure relates to a technique for managing log data related to control of a vehicle.

### BACKGROUND ART

In recent years, various techniques for utilizing a machine learning model as artificial intelligence (AI) in the field of vehicle control have been proposed. For example, the following Patent Literature 1 is a document disclosing a technique for utilizing a machine learning model in the field of vehicle control. In addition, the following Patent Literatures 2 and 3 are documents showing the technical level of the present technical field.

### List of Related Art

Patent Literature 1: JP 2020067762 A
Patent Literature 2: JP 2008070128 A
Patent Literature 3: JP 2010025598 A

### SUMMARY

Control of a vehicle is performed based on information about the surrounding environment of the vehicle. The surrounding environment of the vehicle is recognized by a sensor provided in the vehicle. The information detected by the sensor may change slightly due to changes in version, aging, and the like. On the other hand, the inference result by a machine learning model may change significantly in response to a small change in input. Therefore, when a machine learning model is used for controlling a vehicle, there is a possibility that sufficient control performance may not be ensured due to a change in the information detected by the sensor.

An object of the present disclosure is, in view of the above problems, to provide a technique that makes it possible to record and verify a change in information detected by a sensor for recognizing surrounding environment.

### [Means for Solving the Problems]

A first aspect of the present disclosure is directed to a log management system.

The log management system comprises:
one or more processors configured to manage log data related to control of a vehicle; and
one or more storage devices storing the log data and specific point information that shows one or more specific points.

The vehicle includes a recognition sensor for recognizing a surrounding environment of the vehicle.

The one or more processors are further configured to execute:
when it is determined that the vehicle has traveled through any one of the one or more specific points based on the specific point information, recording detection information detected by the recognition sensor at the one specific point through which the vehicle has traveled in association with the one specific point in the log data;
acquiring past detection information associated with the same specific point as the one specific point by referring to the log data;
comparing the detection information recorded this time with the past detection information to determine whether there is a significant difference therebetween; and
when it is determined that there is the significant difference, recording a determination that there is the significant difference in the log data.

A second aspect of the present disclosure is directed to a log management method for managing, by a computer, log data related to control of a vehicle. The computer includes one or more storage devices storing the log data and specific point information that shows one or more specific points. The vehicle includes a recognition sensor for recognizing a surrounding environment of the vehicle.

The log management method includes:
when it is determined that the vehicle has traveled through any one of the one or more specific points based on the specific point information, recording detection information detected by the recognition sensor at the one specific point through which the vehicle has traveled in association with the one specific point in the log data;
acquiring past detection information associated with the same specific point as the one specific point by referring to the log data;
comparing the detection information recorded this time with the past detection information to determine whether there is a significant difference therebetween; and
when it is determined that there is the significant difference, recording a determination that there is the significant difference in the log data.

According to the present disclosure, it is possible to record and verify a change in information detected by a sensor for recognizing surrounding environment of a vehicle.

### BRIEF DESCRIPTION OF DRAWINGS

FIG. 1 is a diagram showing an example of a configuration related to automated driving control according to the present embodiment;
FIG. 2 is a diagram showing a hardware configuration of a log management system according to the present embodiment;
FIG. 3 is a diagram showing a functional configuration of the log management system according to the present embodiment;
FIG. 4A is a diagram showing a first practical example of a part of processing of the log management system according to the present embodiment;
FIG. 4B is a diagram showing a second practical example of a part of processing of the log management system according to the present embodiment;
FIG. 5 is a diagram showing an example of log data recorded by the log management system according to the present embodiment; and
FIG. 6 is a flowchart showing processing executed by the log management system according to the present embodiment.

### DETAILED DESCRIPTION

### 1. LOG MANAGEMENT SYSTEM

The present embodiment relates to a log management system for managing log data related to control of a vehicle. In particular, the following will describe a case of managing log data related to automated driving control of a vehicle. However, as will be understood in the following description, the present embodiment may be similarly applied to a case of managing log data related to other control.

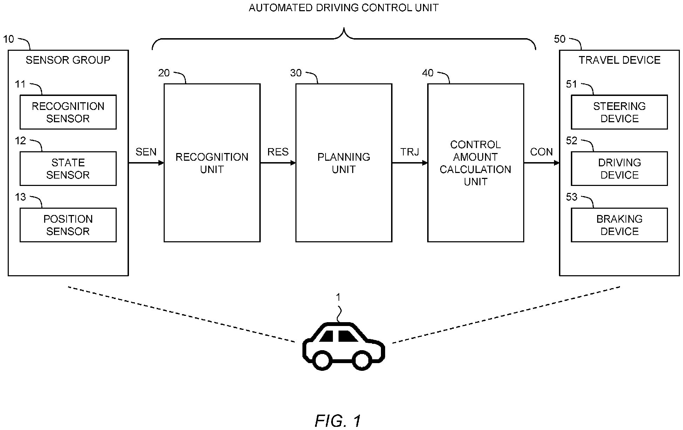

FIG. 1 is a block diagram showing an example of a configuration related to automated driving control of a vehicle 1 according to the present embodiment. The automated driving is to automatically perform at least one of steering, acceleration, and deceleration of the vehicle 1 without depending on a driving operation performed by an operator. The automated driving control is a concept including not only complete automated driving control but also risk avoidance control, lane keep assist control, and the like. The operator may be a driver on board the vehicle 1 or may be a remote operator who remotely operates the vehicle 1.

The vehicle 1 includes a sensor group 10, a recognition unit 20, a planning unit 30, a control amount calculation unit 40, and a travel device 50.

The sensor group 10 includes a recognition sensor 11 used for recognizing a situation around the vehicle 1. Examples of the recognition sensor 11 include a camera, a laser imaging detection and ranging (LIDAR), a radar, and the like. The sensor group 10 may further include a state sensor 12 that detects a state of the vehicle 1, a position sensor 13 that detects a position of the vehicle 1, and the like. Examples of the state sensor 12 include a speed sensor, an acceleration sensor, a yaw rate sensor, a steering angle sensor, and the like. As the position sensor 13, a global navigation satellite system (GNSS) sensor is exemplified.

Sensor detection information SEN is information detected by the use of the sensor group 10. For example, the sensor detection information SEN includes image data captured (taken) by the camera. Alternatively, the sensor detection information SEN may include information (e.g., relative position, relative velocity, shape, and the like) regarding a specific object appearing in the image (e.g., a pedestrian, a preceding vehicle, a white line, a bicycle, a road sign, and the like). Also, for example, the sensor detection information SEN may include point group data acquired by the LIDAR. Also, for example, the sensor detection information SEN may include information on a relative position and a relative velocity of objects detected by the radar. The sensor detection information SEN may include vehicle state information indicating the state of the vehicle 1. The sensor detection information SEN may include position information indicating the position of the vehicle 1.

The recognition unit 20 receives the sensor detection information SEN. The recognition unit 20 recognizes a situation around the vehicle 1 based on sensor detection information SEN detected by the recognition sensor 11. For example, the recognition unit 20 recognizes the current position of an object around the vehicle 1 on a spatial map. Examples of the object include a pedestrian, another vehicle (e.g., a preceding vehicle, a parked vehicle, and the like), a white line, a bicycle, a road structure (e.g., a guard rail, a curb, and the like), a fallen object, a traffic light, an intersection, a sign, and the like. Furthermore, the recognition unit 20 may perform prediction of the behavior of an object around the vehicle 1. Recognition result information RES indicates a result of recognition by the recognition unit 20.

The planning unit 30 receives the recognition result information RES from the recognition unit 20. In addition, the planning unit 30 may receive map information generated in advance. The planning unit 30 generates a travel plan of the vehicle 1 based on the received information. The travel plan may be one for arriving at a destination set in advance. The travel plan may be one for avoiding a risk. Examples of the travel plan include maintaining a current travel lane, making a lane change, overtaking, making a right or left turn, steering, accelerating, decelerating, stopping, and the like. Further, the planning unit 30 generates a target trajectory TRJ required for the vehicle 1 to travel in accordance with the travel plan. The target trajectory TRJ includes a target position and a target velocity.

The control amount calculation unit 40 receives the target trajectory TRJ from the planning unit 30. Furthermore, the control amount calculation unit 40 may receive the sensor detection information SEN such as the vehicle state information and the position information. The control amount calculation unit 40 calculates a control amount CON required for the vehicle 1 to follow the target trajectory TRJ. It can be also said that the control amount CON is a control amount required for reducing a deviation of the vehicle 1 from the target trajectory TRJ. The control amount CON includes at least one of a steering control amount, a driving control amount, and a braking control amount. Examples of the steering control amount include a target steering angle, a target steering torque, a target motor angle, a target motor drive current, and the like. Examples of the driving control amount include a target speed, a target acceleration, and the like. Examples of the braking control amount include a target speed, a target deceleration, and the like.

The travel device 50 includes a steering device 51, a driving device 52, and a braking device 53. The steering device 51 steers wheels of the vehicle 1. For example, the steering device 51 includes an electric power steering (EPS) device. The driving device 52 is a power source that generates a driving force. Examples of the driving device 52 include an engine, an electric motor, an in-wheel motor, and the like. The braking device 53 generates a braking force. The travel device 50 receives the control amount CON from the control amount calculation unit 40. The travel device 50 operates the steering device 51, the driving device 52, and the braking device 53 in accordance with the steering control amount, the driving control amount, and the braking control amount, respectively. Thus, the vehicle 1 travels so as to follow the target trajectory TRJ.

The recognition unit 20 includes at least one of a rule-based model and a machine learning model. The rule-based model performs the recognition process based on a predetermined rule group. Examples of the machine learning model include a neural network (NN), a support vector machine (SVM), a regression model, a decision tree model, and the like. The NN may be a convolutional neural network (CNN), a recurrent neural network (RNN), or a combination of CNN and RNN. The type of each layer, the number of layers, and the number of nodes in the NN are arbitrary. The machine learning model is generated in advance through machine learning. The recognition unit 20 performs the recognition process by inputting the sensor detection information SEN into the model. The recognition result information RES is output from the model or generated based on the output from the model.

Similarly, the planning unit 30 also includes at least one of a rule-based model and a machine learning model. The planning unit 30 performs the planning process by inputting the recognition result information RES into the model. The target trajectory TRJ is output from the model or generated based on the output from the model.

Similarly, the control amount calculation unit 40 also includes at least one of a rule-based model and a machine learning model. The control amount calculation unit 40 performs the control amount calculation process by inputting the target trajectory TRJ into the model. The control amount CON is output from the model or generated based on the output from the model.

Two or more of the recognition unit 20, the planning unit 30, and the control amount calculation unit 40 may have an integrated architecture. All of the recognition unit 20, the planning unit 30, and the control amount calculation unit 40 may have an integrated architecture (End-to-End architecture). For example, the recognition unit 20 and the planning unit 30 may have an integrated architecture that generates and outputs the target trajectory TRJ directly from the sensor detection information SEN. Even in the case of the integrated architecture, intermediate products such as the recognition result information RES and the target trajectory TRJ may be output. For example, in a case where the recognition unit 20 and the planning unit 30 have an integrated architecture based on a NN, the recognition result information RES may be an output from an intermediate layer of the NN.

The recognition unit 20, the planning unit 30, and the control amount calculation unit 40 constitute an "automated driving control unit" that controls the automated driving of the vehicle 1. In the present embodiment, a machine learning model is used for at least a part of the automated driving control unit. In other words, at least one of the recognition unit 20, the planning unit 30, and the control amount calculation unit 40 includes the machine learning model. The automated driving control unit performs the automated driving control of the vehicle 1 by using the machine learning model.

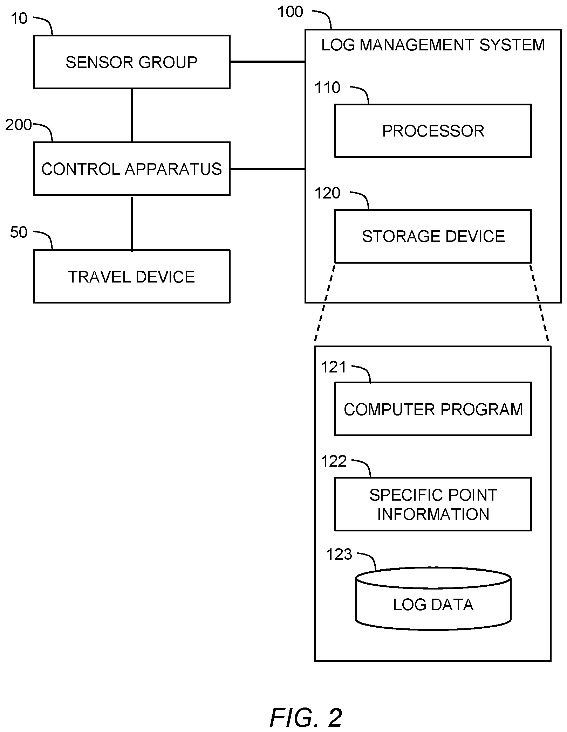

The log management system according to the present embodiment manages log data related to the automated driving control of the vehicle 1 described above. FIG. 2 is a diagram showing an example of a hardware configuration of the log management system 100 according to the present embodiment. In FIG. 2, a control apparatus 200 represents a computer with at least the function of the automated driving control unit described above. For example, the control apparatus 200 is a group of electronic control units (ECUs) provided in the vehicle 1.

The log management system 100 is configured to communicate with the sensor group 10 and the control apparatus 200. The log management system 100 may be installed in the vehicle 1 or may be implemented in a server outside the vehicle 1. When the log management system 100 is installed in the vehicle 1, the log management system 100 is connected to an in-vehicle network such as a control area network (CAN), for example. When the log management system 100 is implemented in the server outside the vehicle 1, the log management system 100 communicates with the vehicle 1 via a mobile communication network, for example. The log management system 100 may be configured to communicate with a plurality of vehicles.

The log management system 100 includes one or more processors 110 (hereinafter, simply referred to as a processor 110 or processing circuitry) and one or more storage devices 120 (hereinafter, simply referred to as a storage device 120). The processor 110 executes a variety of processing. The processor 110 may be configured with, for example, a central processing unit (CPU) including an arithmetic device, a register, and the like. The storage device 120 stores a variety of information. The storage device 120 may be configured with, for example, a recording medium such as a read only memory (ROM), a random-access memory (RAM), a hard disk drive (HDD), a solid state drive (SSD), and the like.

The storage device 120 stores a computer program 121, specific point information 122, and log data 123.

The computer program 121 is executed by the processor 110. The variety of processing by the log management system 100 may be implemented by a cooperation of the processor 110 executing the computer program 121 and the storage device 120. The computer program 121 may be recorded on a non-transitory computer-readable recording medium.

The specific point information 122 is information that shows one or more specific points. Each of the one or more specific points may be arbitrarily set. The specific point information 122 includes information regarding a traffic sign, a signboard, a road structure, and the like provided at each specific point (e.g., type, display content, sample image, relative position with respect to the specific point, shape, color, and the like). The specific point information 122 is preferably constant at each specific point. Therefore, it is advantageous to employ information on the traffic sign (hereinafter referred to as "traffic sign information") as the specific point information 122. This is because the traffic sign is not easily relocated. In addition, since the traffic sign is usually managed by map information in the vehicle 1, it is also possible to correct it based on the map information. From this viewpoint, each of the one or more specific points may be a point at which some traffic sign is located. The specific point information 122 may include information on the position of each specific point on the map.

The log data 123 is recorded by processing executed by the processor 110. In the present embodiment, the processor 110 acquires data related to the automated driving control and records the data in the log data 123 while performing the automated driving control of the vehicle 1. Examples of the data related to the automated driving control include the sensor detection information SEN, the recognition result information RES, the target trajectory TRJ, the control amount CON, and the like. In addition, the data related to the automated driving control may include a reason for determination in recognition processing by the recognition unit 20, a reason for determination in planning processing by the planning unit 30, the presence or absence of intervention of the operator in the automated driving control, and the like. Further, when the log management system 100 communicates with a plurality of vehicles, the log data 123 may include data of each vehicle. The log data 123 is expected to be used for verification of the automated driving control and the like. The details of the processing executed by the processor 110 for recording the log data 123 will be described later.

### 2. FUNCTION OF LOG MANAGEMENT SYSTEM

The automated driving control unit performs automated driving control of the vehicle 1 based on the sensor detection information SEN detected by the sensor group 10. In particular, in the automated driving control, the travel plan and the target trajectory TRJ are determined according to the situation around the vehicle 1. The situation around the vehicle 1 is recognized by the recognition unit 20 based on the sensor detection information SEN detected by the recognition sensor 11. In this respect, the sensor detection information SEN detected by the recognition sensor 11 has a significant influence on the operation of the automated driving control. In the present embodiment, a machine learning model is used for at least a part of the automated driving control unit.

The information detected by the recognition sensor 11 may change slightly due to changes in version, aging, and the like. On the other hand, a machine learning model output an inference result based on probabilistic inference based on training data. Therefore, the inference result by the machine learning model may change significantly in response to a small change in input. For this reason, there is a possibility that the control performance of the automated driving control cannot be sufficiently ensured due to a change in the sensor detection information SEN detected by the recognition sensor 11.

The log management system 100 according to the present embodiment makes it possible to record and verify a change in the sensor detection information SEN detected by the recognition sensor 11 (hereinafter, simply referred to as "the detection information").

### 2-1. Functional Configuration

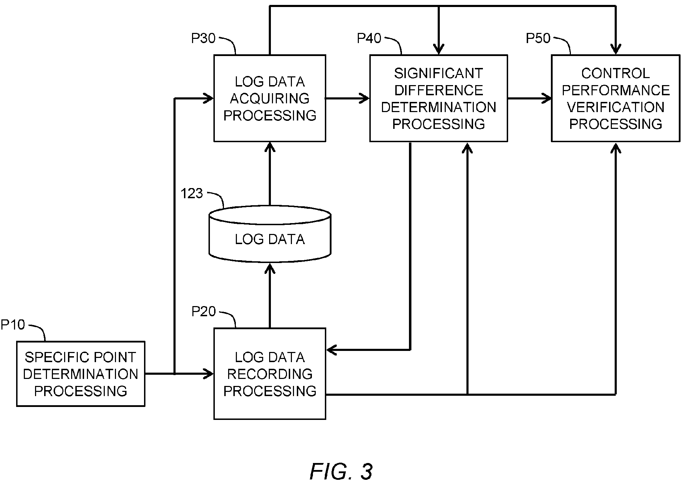

FIG. 3 is a diagram showing an example of a functional configuration of the log management system 100 according to the present embodiment. In FIG. 3, a specific point determination processing P 10, a log data recording processing P20, a log data acquiring processing P30, a significant difference determination processing P40, and a control performance verification processing P50 may be implemented by the processor 110.

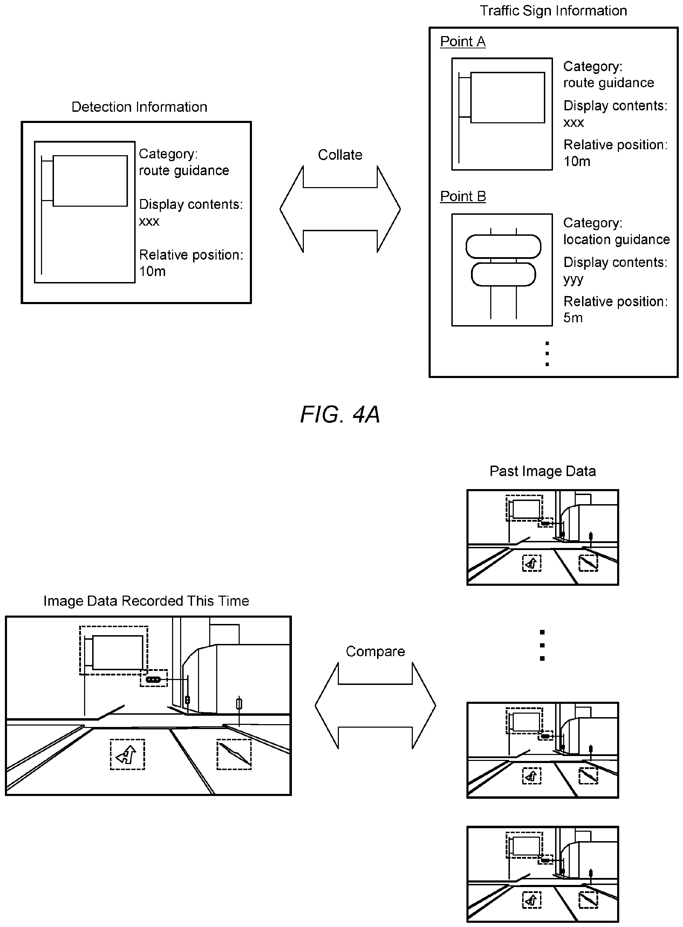

The specific point determination processing P10 determines whether the vehicle 1 has traveled through any one of the one or more specific points based on the specific point information 122. For example, when the specific point information 122 includes the traffic sign information of each specific point, the specific point determination processing P 10 can determine that the vehicle 1 has traveled through any one of the one or more specific points by collating the detection information with the traffic sign information. In this case, the collation is performed, for example, by confirming the coincidence of the category of the traffic sign, the coincidence of the display contents, the coincidence of the feature point with the sample image, the coincidence of the relative position, the coincidence of the shape, the coincidence of the color, and the like. FIG. 4A is a conceptual diagram showing an example of collation between the detection information and the traffic sign information. In FIG. 4A, the category, the display contents, the relative position with respect to the specific point, and the sample image are given as the traffic sign information. In the example shown in FIG. 4A, the specific point determination processing P10 can determine that the vehicle 1 has traveled through the point A by the collation. By configuring the specific point determination processing P10 in this way, it is possible to precisely determine that the vehicle 1 has traveled through any one of the one or more specific points. In addition, when the specific point information 122 includes information on the position of each specific point on the map, the specific point determination processing P10 may be configured to determine whether the vehicle 1 has traveled through any one of the one or more specific points from the position information of the vehicle 1.

Refer to FIG. 3 again. The specific point determination processing P10 notifies the log data recording processing P20 and the log data acquiring processing P30 of the determination result including information of the specific point where the vehicle has traveled.

The log data recording processing P20 records date related to the automated driving control of the vehicle 1 in the log data 123. In particular, when receiving the determination result showing that the vehicle 1 has traveled any one of the one or more specific points, the log data recording processing P20 records the detection information and an inference result by a machine learning model used in the automated driving control unit (hereinafter, simply referred to as a "machine learning model") in the log data 123 in association with the specific point through which the vehicle 1 has traveled.

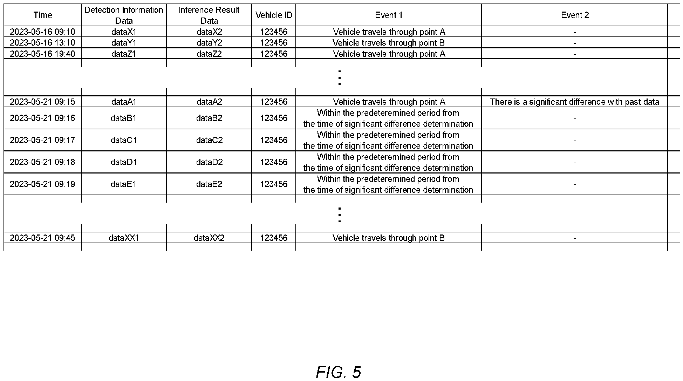

FIG. 5 shows an example of the log data 123 managed by the log management system 100 according to the present embodiment. In the example shown in FIG. 5, dataX1 of the detection information and dataX2 of the inference result are recorded in association with the specific point through which the vehicle has traveled. Similarly, dataY1 of the detection information and dataY2 of the inference result are recorded in association with the specific point through which the vehicle has traveled.

Refer to FIG. 3 again. The log data recording processing P20 notifies the significant difference determination processing P40 and the control performance verification processing P50 of the detection information and the inference result recorded this time, respectively.

The log data acquiring processing P30 acquires the log data recorded in the log data 123. In particular, when receiving the determination result showing that the vehicle 1 has traveled any one of the one or more specific points, the log data acquiring processing P30 acquires past detection information and inference result associated with the same specific point as the specific point through which the vehicle 1 has traveled this time. For example, in the example shown in FIG. 5, when dataA1 and dataA2 are recorded, the log data acquiring processing P30 acquires dataX1 and dataX2 associated with the same point A. Similarly, the log data acquiring processing P30 acquires data Y1 and dataY2 associated with the same point A. The log data acquiring processing P30 notifies the significant difference determination processing P40 and the control performance verification processing P50 of the acquired past detection information and inference result, respectively. The data acquired by the log data acquiring processing P30 may be data of other vehicles.

The significant difference determination processing P40 compares the detection information recorded this time with the acquired past detection information to determine whether there is a significant difference. The significant difference determination processing P40 can determine whether or not there is a significant difference in the detection information recorded this time based on the statistics data obtained from the past detection information. For example, when comparing image data, the significant difference determination processing P40 calculates a statistical model for brightness, distortion, inclination, the number of detected objects, relative positions of the detected objects, etc., and determines whether there is a significant in the detection information recorded this time with respect to the calculated statistical model. FIG. 4B is a conceptual diagram showing an example of comparison between image data recorded this time and past image data. In the example shown in FIG. 4B, the significant difference determination processing P40 can determine whether or not there is a significant difference by comparing the image data recorded this time with the past image data with respect to the position, range, and number of detected objects (objects surrounded by a dotted line).

The detection information recorded this time and the acquired past detection information are information detected by the recognition sensor 11 at the same point. Therefore, each is expected to have equivalent information to the other. Therefore, when it is determined that there is a significant difference, it can be considered that a change in the detection information has occurred due to changes in version, aging, etc. of the recognition sensor 11.

Refer to FIG. 3 again. The significant difference determination processing P40 notifies the log data recording processing P20 and the control performance verification processing P50 of the determination result.

When the log data recording processing P20 receives the determination result showing that it is determined that there is a significant difference, the log data recording processing P20 records the determination result showing that there is a significant difference in the log data 123. In the example shown in FIG. 5, the determination that there is a significant difference is recorded with respect to dataA1 and dataA2. Data in which the determination that there is a significant difference is recorded is likely to be data that requires verification. Therefore, by recording the determination that there is a significant difference, verification can be effectively performed when the automated driving control is verified.

Further, the log data recording processing P20 may be configured to record the detection information and the inference result in the log data 123 in association with the determination that there is a significant difference during a predetermined period from a time point at which it is determined that there is a significant difference or during a predetermined area from the specific point through which the vehicle has traveled this time. In the example shown in FIG. 5, the detection information and the inference result are recorded for a predetermined period from the time when it is determined that there is a significant difference with respect to dataA1 and dataA2. Data after it is determined that there is a significant difference is also likely to be data that requires verification. Therefore, this configuration makes it possible to verify the automated driving control more effectively.

In addition, in a case where data recorded in the log data 123 is periodically deleted, data in which the determination that there is a significant difference or data recorded in association with the determination that there is a significant difference may be stored for a longer period of time than usual. Alternatively, it may be configured not to delete such data.

When the control performance verification processing P50 receives the determination result showing that it is determined that there is a significant difference, the control performance verification processing P50 compares the inference result recorded this time with the past inference result acquired to verify the performance of the automated driving control. For example, when a machine learning model is used in the recognition unit 20, the control performance verification processing P50 compares the position of a specific object in the inference result on the spatial map to verify the recognition performance. The control-performance verification processing P50 may be configured to issue a warning when it detects that a certain level of the control performance is not ensured. In this way, the control performance verification processing P50 makes it possible to appropriately verify the performance of the automated driving control when the detection information has changed.

### 2-2. Processing

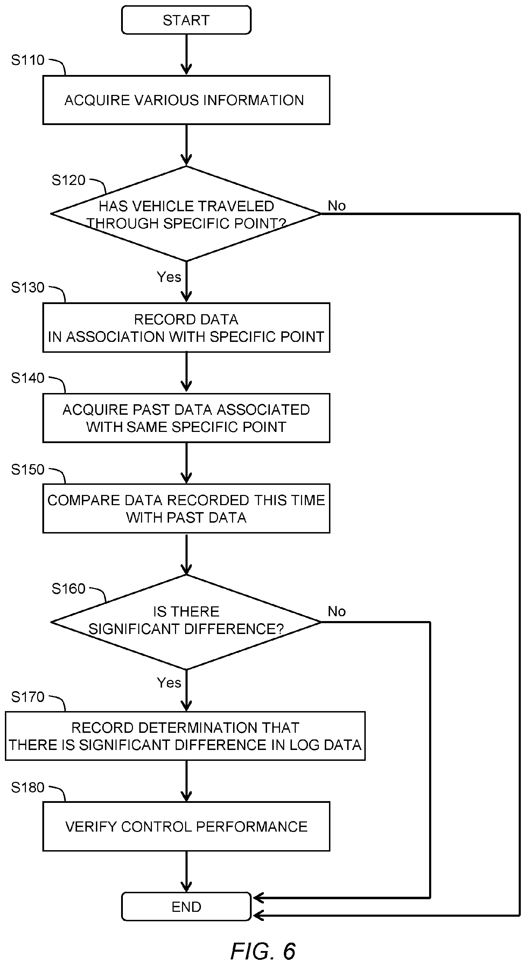

FIG. 6 is a flowchart showing an example of processing executed by the log management system 100 based on the functional configuration described above, more specifically, processing executed by the processor 110. The flowchart shown in FIG. 6 may be repeatedly executed at a predetermined cycle while the vehicle 1 is performing the automated driving control.

In step S110, the processor 110 acquires various information including the detection information and the specific point information 122.

Next, in step S120, the processor 110 determines whether or not the vehicle 1 has traveled through any one of the one or more specific points based on the specific point information 122.

When determining that the vehicle 1 has not traveled through any specific point (step S120; No), the processor 110 ends the current process. When it is determined that the vehicle 1 has traveled through any one of the one or more specific points (step S120; Yes), the process proceeds to step S130.

In step S130, the processor 110 records detection information and an inference result at a specific point through which the vehicle has traveled in the log data 123.

Next, in step S140, the processor 110 refers to the log data 123 and acquires past detection information and past inference result associated with the same specific point as the specific point through which the vehicle has traveled this time.

Next, in step S150, the processor 110 compares the detection information recorded this time with the past detection information, and determines whether or not there is a significant difference.

When determining that there is no significant difference (step S160; No), the processor 110 ends the current process. When determining that there is a significant difference (step S160; Yes), the processor 110 records the determination that there is a significant difference in the log data 123 (step S170). And the processor 110 verifies the performance of the automated driving control by comparing the inference result recorded this time with the past inference result (step S180). After step S180, the processor 110 ends the current process.

The functions of the log management system 100 according to the present embodiment are realized by the processor 110 executing the processing in this way. And the log management method according to the present embodiment is implemented by the processor 110 executing the processing in this way. And the log management program according to the present embodiment is realized by the computer program 121 that causes the processor 110 to execute the processing in this way.

### 3. EFFECT

As described above, according to the present embodiment, when it is determined that the vehicle 1 has traveled through any one of the one or more specific points, the detection information detected by the recognition sensor 11 at the specific point through which the vehicle 1 has traveled is recorded in the log data 123 in association with the specific point through which the vehicle 1 has traveled. Further, past detection information associated with the same specific point as the specific point through which the vehicle 1 has traveled this time is acquired. Then, the detection information recorded this time is compared with the acquired past detection information to determine whether or not there is a significant difference, and the determination that there is a significant difference is recorded in the log data 123. As described above, according to the present embodiment, it is possible to record and verify a change in the detection information detected by the recognition sensor 11.

## Claims

1. A log management system (100) comprising:
one or more processors (110) configured to manage log data (123) related to control of a vehicle (1); and
one or more storage devices (120) storing the log data (123) and specific point information (122) that shows one or more specific points, wherein
the vehicle (1) includes a recognition sensor (11) for recognizing a surrounding environment of the vehicle (1), and
the one or more processors (110) are further configured to execute:
when it is determined that the vehicle (1) has traveled through any one of the one or more specific points based on the specific point information (122), recording detection information detected by the recognition sensor (11) at the one specific point through which the vehicle (1) has traveled in association with the one specific point in the log data (123);
acquiring past detection information associated with the same specific point as the one specific point by referring to the log data (123);
comparing the detection information recorded this time with the past detection information to determine whether there is a significant difference therebetween; and
when it is determined that there is the significant difference, recording a determination that there is the significant difference in the log data (123).

2. The log management system (100) according to claim 1, wherein
the control of the vehicle (1) includes control using a machine learning model, and
the one or more processors (110) are further configured to execute, when it is determined that there is the significant difference, recording the detection information and an inference result output by the machine learning model in the log data (123) in association with the determination that there is the significant difference during a predetermined period from a time point at which it is determined that there is the significant difference or during a predetermined area from the one specific point.

3. The log management system (100) according to claim 1, wherein
the control of the vehicle (1) includes control using a machine learning model, and
the one or more processors (110) are further configured to execute:
recording an inference result output by the machine learning model at the one specific point in association with the one specific point in the log data (123);
acquiring past inference result associated with the same specific point as the one specific point by referring to the log data (123); and
when it is determined that there is the significant difference, verifying a performance of the control of the vehicle (1) by comparing the inference result recorded this time with the past inference result.

4. The log management system (100) according to any one of claims 1 to 3,
wherein
the specific point information (122) includes sign information regarding a traffic sign installed at each of the one or more specific points, and
the one or more processors (110) are configured to determine that the vehicle (1) has through any of the one or more specific points by collating the detection information with the sign information.

5. A log management method for managing, by a computer, log data (123) related to control of a vehicle (1), wherein
the computer includes one or more storage devices (120) storing the log data (123) and specific point information (122) that shows one or more specific points,
the vehicle (1) includes a recognition sensor (11) for recognizing a surrounding environment of the vehicle (1), and
the log management method includes:
when it is determined that the vehicle (1) has traveled through any one of the one or more specific points based on the specific point information (122), recording detection information detected by the recognition sensor (11) at the one specific point through which the vehicle (1) has traveled in association with the one specific point in the log data (123);
acquiring past detection information associated with the same specific point as the one specific point by referring to the log data (123);
comparing the detection information recorded this time with the past detection information to determine whether there is a significant difference therebetween; and
when it is determined that there is the significant difference, recording a determination that there is the significant difference in the log data (123).
